# EUROPÄISCHE PATENTANMELDUNG

(11) **EP 0 699 735 A1**
(43) Veröffentlichungstag der Anmeldung: **06.03.1996**
(21) Anmeldenummer: 95113486.5
(22) Anmeldetag: 28.08.1995
(51) Int. Cl.: C10J 3/66, C10B 53/00

(54) **Verfahren zur kombinierten Aufarbeitung von PVC und anderen chlorierten Kohlenwasserstoffen**

(30) Priorität: 31.08.1994 DE 4430970
(71) Anmelder: LINDE-KCA-Dresden GmbH, D-01067 Dresden (DE)
(72) Erfinder: Marschner, Siegmar, Dr.Dipl.-Ing., D-01129 Dresden (DE)
(74) Vertreter: Kasseckert, Rainer

(57) **Zusammenfassung**

Die Erfindung betrifft ein Verfahren zur kombinierten Aufarbeitung von PVC und anderen chlorierten Kohlenwasserstoffen durch rohstoffliche Zerlegung. Die Merkmale des Verfahrens sind,
a) daß das PVC gequetscht und unter Erwärmung aufgespalten wird, wobei ein Spaltgas mit hohem HCl-Gehalt und ein im wesentlichen Kohlenwasserstoffe enthaltender feinkörniger, frei fließfähiger Spaltkoks gewonnen werden,
b) daß der Spaltkoks einer Vergasung, vorzugsweise einer Flugstromvergasung, zugeführt wird, wobei aus der Vergasung neben Schlacke ein Brenngas gewonnen wird und
c) daß dieses Brenngas zumindest teilweise in einen Verbrennungsofen gegeben wird, in dem andere, vorzugsweise flüssige und/oder pastöse chlorierte Kohlenwasserstoffe verbrannt werden.

## Beschreibung

Die Erfindung betrifft ein Verfahren zur kombinierten Aufarbeitung von PVC und anderen chlorierten Kohlenwasserstoffen durch rohstoffliche Zerlegung.

PVC (Polyvinylchlorid) ist ein häufig verwendeter Kunststoff. Dabei wird in der Regel das PVC nicht in der chemisch reinen Form eingesetzt, sondern mit unterschiedlichen Beimengungen vermischt. Die große Vielfalt an Beimengungen in unterschiedlichen Konzentrationen ergeben die sehr weit gefächerte Palette von Anwendungseigenschaften der Kunststoffe auf PVC-Basis. Man unterscheidet grundsätzlich zwischen Hart-PVC und Weich-PVC. Während Hart-PVC nur in geringer Konzentration Stabilisatoren, Gleitmittel, Farbpigmente und eventuell Füllstoffe (z.B. Kreide) enthält, sind dem Weich-PVC in hoher Konzentration Weichmacher zugemischt (vorwiegend Ester der Phthalsäure).

Zur Schonung der Ressourcen sowie der Deponiekapazität ist man bestrebt, Kunststoffabfälle zu Recyclaten aufzuarbeiten und danach erneut zu verwenden. Dieses werkstoffliche Recycling ist bei PVC wegen der großen Sortenvielfalt nur bedingt möglich. So lassen sich sortenrein gesammelte PVC-Abfälle aus Fensterprofilen nach einem Umschmelzen erneut zu Fensterprofilen verarbeiten. Das werkstoffliche Recycling von PVC-Gemischen führt dagegen nur zu minderwertigen Produkten. Gemischte PVC-Abfälle sind deshalb vorteilhaft nur durch rohstoffliche Zerlegung einem Recycling zuzuführen. Unter rohstofflicher Zerlegung wird die Aufspaltung der Polymerketten in die monomeren Grundbausteine der Kunststoffe verstanden.

Die rohstoffliche Zerlegung von PVC ist im Vergleich zu anderen Kunststoffen schwierig. Während z.B. Polyolefine durch Wärmebehandlung in ihre monomeren Grundbausteine, die Olefine, zerfallen können, gelingt es nicht, das PVC wieder direkt in Vinylchlorid umzuwandeln. Vielmehr spaltet reines PVC, d.h. ohne Beimengungen von Stabilisatoren, Weichmachern, Füllstoffen, bei Temperaturen oberhalb 200 °C Chlorwasserstoff (HCl) ab. Als flüchtige Spaltprodukte entweichen außerdem aromatische Verbindungen, überwiegend Benzol (s. Knümann, Bockhorn; Chemie-Ingenieur-Technik 66 (1994), 1, S. 74-76). Nach der bei etwa 400 °C abgeschlossenen Abtrennung des HCl erfolgt bis etwa 500 °C die weitere Aufspaltung in vorwiegend aromatische Verbindungen und einen koksartigen Rückstand.

Wesentlich komplizierter ist der Zersetzungsvorgang von technischem PVC, weil das freigesetzte HCl mit den Beimengungen zu Chloriden reagieren kann. Sind Ester der Phthalsäure als Weichmacher vorhanden, entstehen z.B. Phthalsäuredichlorid und Olefine wie 1-Octen und 1-Decen sowie Wasser. Mit dem Füllstoff Kreide reagiert HCl zu CaCl₂, CO₂ und H₂O. Metalle der Stabilisatoren und Pigmente reagieren zu Metallchloriden. Somit kann aus technischem PVC in der Regel nicht das gesamte Chlor als HCl gewonnen werden. Je nach PVC-Sorte schwankt der Chlorgehalt im Abfall-PVC zwischen ca. 20 Gew.-% und 57 Gew.-%, also in einem Verhältnis von etwa 1:3. Dabei stehen in Gemischen mit geringem Chlorgehalt mehr Reaktionspartner für das abgespaltene HCl zur Verfügung als in den Gemischen mit hohem Chlorgehalt. Unter Berücksichtigung der Nebenreaktionen des HCl schwankt somit die nutzbare HCl-Menge pro Mengeneinheit Abfall-PVC in noch weiteren Grenzen.

Bei entsprechender Reinheit kann HCl-Gas zur erneuten Gewinnung von PVC verwendet werden über die Reaktionsschritte:
- Oxichlorierung von Ethen zu 1,2-Dichlorethan (EDC)

   C₂H₄ + 2 HCl + 0,5O₂ ⇒ ClCH₂ - CH₂Cl + H₂O
- Dehydrochlorierung von EDC zu Vinylchlorid

   ClCH₂ - CH₂Cl ⇒ H₂C = CHCl + HCl
- Polymerisation von Vinylchlorid zu PVC.

Damit ist der Chlorkreislauf für PVC geschlossen. Die kontinuierlich arbeitenden Anlagen zur Oxichlorierung verlangen die Bereitstellung von HCl-Gas in einem möglichst konstanten Mengenstrom.

Die Aufarbeitung von Abfall-PVC hat eine möglichst vollständige Umsetzung des Chlores in HCl-Gas für die Oxichlorierung zum Ziel. Die organischen Bestandteile des PVC dienen zweckmäßig als Energiequelle.

Das japanische Patent J 52125581-A vom 21.10.77 (15.04.76) beschreibt die Zersetzung von Abfall-PVC in einem beheizten Extruder zu HCl-Gas und einem festen Rückstand. Der feste Rückstand wird nach Austritt aus dem Extruder mechanisch zerkleinert, das HCl-Gas in Wasser absorbiert.

Nachteilig ist die benötigte Einrichtung zur Zerkleinerung des Rückstandes.

Andere Verfahren versuchen, vor der eigentlichen Aufarbeitung von Kunststoffgemischen das überwiegend durch PVC eingebrachte Chlor zu entfernen. Dabei ist nicht die Gewinnung von HCl-Gas das Verfahrensziel, sondern der Abbau des schädigenden Einflusses von Chlor und Chlorwasserstoff auf die nachfolgenden Verfahrensstufen. So beschreibt K. Niemann (Erdöl-Erdgas-Kohle 109 (1993), 11, S. 459-463) die Depolymerisation von Kunststoffen, die auch zum Teil PVC enthalten dürfen, durch thermische Behandlung bei Temperaturen von 350 bis 400 °C im Vakuumrückstand. Das im Kunststoffgemisch enthaltene PVC sowie andere chlorhaltige Kohlenwasserstoffe spalten dabei das Chlor zum überwiegenden Teil als Chlorwasserstoffgas ab, das nach Absorption in Wasser als Salzsäure vermarktet wird. Bei diesen Temperaturen werden außerdem alle Kunststoffe zu pumpfähigen Kohlenwasserstoffen gespalten.

Nachteilig ist, daß diese gespaltenen Kohlenwasserstoffe zwar in geringem, aber dennoch nicht zu vernachlässigendem Umfang organisch gebundenes Chlor enthalten. Sie müssen vor einer weiteren Verwendung zunächst einer Hydrierung unterworfen werden.

Die von K. Niemann zitierte KAB-Depolimerisationsanlage der Kohleöl-Anlage Bottrop verzichtet auf eine vollständige HCl-Rückgewinnung, indem sie das während der Hydrierung freiwerdende HCl durch alkalische Additive neutralisiert. Deshalb muß in dieser Anlage der PVC-Anteil bzw. der Anteil chlorhaltiger Kohlenwasserstoffe im aufgearbeiteten Kunststoffgemisch ebenso wie bei der Verfahrensvariante der degradativen Extrusion auf ca. 10 % limitiert bleiben.

Die Verwendung der Vergasungstechnologie mit gegenüber der Verbrennung umweltfreundlicheren Abprodukten ist zumindest für die Aufarbeitung von Weich-PVC problematisch. Denn in Festbettvergasern bäckt das Weich-PVC zu einer zähen, in der Regel klebrigen Masse zusammen. Daher ist eine kontinuierliche Vergasung im Festbettvergaser nicht möglich. Eine denkbare Entsorgung von Weich-PVC durch einen Flugstromvergaser bedingt eine vorangehende Tieftemperaturvermahlung des Einsatzstoffes, die einerseits sehr aufwendig und andererseits außerordentlich kostenintensiv ist.

Eine Wirbelschichtpyrolyse von Kunststoffgemischen mit hohen PVC-Gehalten scheitert daran, daß die Sandwirbelschicht in diesem Fall verklebt.

Die Aufgabe der vorliegenden Erfindung ist es, ein Verfahren aufzuzeigen, das auf möglichst einfache und kostengünstige Weise ermöglicht, die rohstoffliche Zerlegung von PVC ohne Einschränkung auf bestimmte PVC-Sorten mit möglichst hoher Ausbeute an HCl-Gas durchzuführen und gleichzeitig das HCl-Gas in einer für die Oxichlorierung notwendigen Reinheit in einem möglichst konstanten Mengenstrom zur Verfügung zu stellen.

Diese Aufgabe wird erfindungsgemäß dadurch gelöst,
a) daß das PVC gequetscht und unter Erwärmung aufgespalten wird, wobei ein Spaltgas mit hohem HCl-Gehalt und ein im wesentlichen Kohlenwasserstoffe enthaltender feinkörniger, frei fließfähiger Spaltkoks gewonnen werden,
b) daß der Spaltkoks einer Vergasung, vorzugsweise einer Flugstromvergasung, zugeführt wird, wobei aus der Vergasung neben Schlacke ein Brenngas gewonnen wird und
c) daß dieses Brenngas zumindest teilweise in einen Verbrennungsofen gegeben wird, in dem andere, vorzugsweise flüssige und/oder pastöse chlorierte Kohlenwasserstoffe verbrannt werden.

In einer Ausführung wird das Rauchgas aus dem Verbrennungsofen zunächst in einem Abhitzekessel abgekühlt wird, in welchem mindestens der zur HCl-Destillation notwendige Dampf erzeugt wird, und anschließend aus dem Rauchgas der Chlorwasserstoff in wäßriger Lösung als Salzsäure absorbiert wird.

Es kann auch das Spaltgas aus der PVC-Spaltung nach einer Vorreinigung zur Entfernung von Rußpartikeln und organischen Bestandteilen ebenfalls einer Chlorwasserstoff-Absorption zugeführt werden, in welcher das HCl in wäßriger Lösung als Salzsäure aus dem Spaltgas entfernt wird.

Bevorzugt wird die Salzsäure aus der Absorptionsstufe für das Spaltgas der PVC-Spaltung und aus der Absorptionsstufe für das Rauchgas des Verbrennungsofens destillativ zu HCl-Gas aufgearbeitet.

Unter dem Begriff "Quetschen" wird dabei eine mechanische und nicht-statische Bearbeitung unter Druck verstanden, wobei eine Umwandlung in den festen Spaltkoks über eine flüssige, zähflüssige und/oder pastöse Zwischenphase erfolgt und wobei das PVC insbesondere in der Zwischenphase bei diesem Quetschen (oder auch Pressen) bewegt wird, beispielsweise durch Rühren oder Kneten.

Im Unterschied zur degradativen Extrusion wird aus PVC im erfindungsgemäßen Verfahren außer einem Spaltgas mit dem Spaltkoks ein Feststoff (und keine flüssigen oder pastösen bzw. hochviskosen Stoffe) gewonnen. Dieser Spaltkoks kann gegebenenfalls noch einen restlichen minimalen Chlorgehalt aufweisen.

Das Quetschen und die Spaltung kann in an sich bekannten Apparaten und Maschinen mit mechanischer Bearbeitung durchgeführt werden, wobei das Quetschen und die Spaltung in demselben Apparat stattfindet. Ein Beispiel für einen derartigen Apparat stellt eine Knetkammer dar. Besonders bewährt im erfindungsgemäßen Verfahren aber hat sich der Einsatz eines Extruders. Zumindestens teilweise kann die für die Erwärmung und Spaltung im erfindungsgemäßen Verfahren notwendige Wärme durch Ausnutzung der bei dem Quetschen entstehenden Friktionswärme zur Verfügung gestellt werden. Die Erwärmung kann aber auch, gegebenenfalls teilweise, durch Wärmeübertragung von außen erfolgen.

Es wurde überraschend gefunden, daß unabhängig von der PVC-Sorte durch Quetschen von PVC-Abfällen in einem Temperaturbereich von 290 - 380 °C, vorzugsweise 310 - 360 °C, und einer Verweilzeit von 10 bis 60 Sekunden immer ein feinkörniger, frei fließfähiger Spaltkoks entsteht, der beim Einsatz von Zweischneckenextrudern eine Korngröße kleiner gleich 500 µm, vorzugsweise zwischen 150 und 300 µm, hat. Bei der angegebenen Verweilzeit im angegebenen Temperaturbereich konnten die Nebenreaktionen des abgespaltenen Chlorwasserstoffs mit Beimengungen des Abfall-PVC weitgehend unterdrückt werden, so daß die HCl-Ausbeute aus Hart-PVC nahe 100 %, aus Weich-PVC ständig über 85 % betrug.

Bei der erfindungsgemäßen Spaltung von PVC-Abfällen durch Quetschen und Erwärmen entsteht vorteilhaft ein Spaltgas mit hohem HCl-Gehalt, welches nur in geringem Umfang Spaltkoks-Staub, organische Spaltprodukte (Aromaten, Olefine), verdampfte Weichmacher, CO₂ sowie geringe Mengen von Wasserdampf enthält. Nach einer Vorreinigung zur Abtrennung des Staubes und der organischen Spaltprodukte wird der Chlorwasserstoff durch adiabate Absorption in wäßrige Lösung überführt, so daß als Abgas fast reines CO₂ entweicht. Der hohe HCl-Gehalt im Spaltgas gestattet vorteilhaft die Erzeugung von hochkonzentrierter Salzsäure mit 30 - 34 Gew.-% HCl. Dadurch ist ein relativ geringer Energiebedarf für die destillative Erzeugung von reinem HCl-Gas notwendig. Dieses im erfindungsgemäßen Verfahren gewonnene HCl-Gas kann zur Herstellung von PVC verwendet werden und wird dazu bevorzugt in eine Oxichlorierung von Ethen gegeben. Durch dieses rohstoffliche Recycling kann ein PVC erzeugt werden, dessen Qualität der von Primär-PVC entspricht.

Die bei der Spaltung von Abfall-PVC ohne Sorteneinschränkung stark schwankenden Mengen an HCl-Gas können über einen kurzen Zeitraum ausgeglichen werden, indem die konzentrierte Salzsäure aus der adiabaten Absorption vor der destillativen Aufarbeitung zu HCl-Gas in einem als Puffer wirkenden Tank zwischengelagert wird. Langfristig wird erfindungsgemäß die HCl-Bilanz ausgeglichen, indem zusätzlich andere, bevorzugt flüssige oder pastöse chlorierte Kohlenwasserstoffe gespalten werden, die gewöhnlich in chlorverarbeitenden Betrieben als zu entsorgender Abfall vorhanden sind. Diese Spaltung erfolgt diskontinuierlich und nur bei Bedarf durch Verbrennung der chlorierten Kohlenwasserstoffe unter Zugabe von Luft.

Die erfindungsgemäß für die Verbrennung der chlorierten Kohlenwasserstoffe eingesetzten Verbrennungsöfen müssen in der Regel beispielsweise wegen ihrer gegen große Temperaturschwankungen empfindlichen Ausmauerung vor allzugroßen Temperaturschwankungen geschützt werden. Außerdem sinkt der Heizwert von chlorierten Kohlenwasserstoffen mit dem Chloranteil ab. Tetrachlormethan diente sogar als Feuerlöschmittel. Deshalb werden Öfen zur Verbrennung von chlorierten Kohlenwasserstoffen mit einer Stützflamme versehen, die z.B. mit Erdgas oder Heizöl gespeist wird. Erfindungsgemäß wird für diese Stützflamme der Energieinhalt des Spaltkokses aus der PVC-Spaltung genutzt. Zu diesem Zweck wird der Spaltkoks zunächst vergast. Das dabei entstehende Brenngas unterhält die Stützflamme des Verbrennungsofens.

Der Verbrennungsofen ist aber nicht geeignet zur Spaltung von festen Chlorkohlenwasserstoffen oder zur Verbrennung des Spaltkokses, sofern diese nicht auf eine extrem feine Körnung mit einem mittleren Durchmesser unter 20 µm aufgemahlen sind. Außerdem ist die sichere Einglasung der Schwermetalle in einer Schlacke nicht gegeben, so daß die im Verbrennungsofen anfallende Asche als Sondermüll entsorgt werden muß. Der Verbrennungsofen muß darüber hinaus ständig auf einer hohen Betriebstemperatur gehalten werden, um eine sichere Betriebsweise und eine lange Lebensdauer zu gewährleisten. Die Entfernung des Chlorwasserstoffes aus dem Rauchgas des Verbrennungsofens führt zu einer relativ niedrigprozentigen Salzsäure.

Vorteilhaft bei der Verwendung des Verbrennungsofens sind die geringen Betriebskosten, weil zur Verbrennung kein teurer Sauerstoff eingesetzt werden muß.

Die Vergasung des Spaltkokses erfolgt vorzugsweise unter Einsatz von Sauerstoff oder eines Gemisches von Sauerstoff und Wasserdampf, vor allem beim Einsatz eines Flugstromvergasers. Auf diese Weise ist eine hohe Vergasungstemperatur von mindestens 1600 °C gewährleistet. Das ermöglicht die sichere Umwandlung von relativ grobkörnigem Spaltkoks in gasförmige Zersetzungsprodukte, die zuverlässige Vermeidung von Dioxinen und Furanen sowie die nicht eluierbare Einglasung der im Spaltkoks vorhandenen Schwermetalle in der aus dem Vergaser abgezogenen Schlacke.

Die erfindungsgemäß aufzuarbeitenden flüssigen/pastösen Chlorkohlenwasserstoffe könnten auch zusammen mit dem Spaltkoks im Vergaser, vorzugsweise Flugstromvergaser, gespalten werden. Für die Vergasung würde dann jedoch zusätzlicher Sauerstoff benötigt, was einen wesentlichen zusätzlichen Kostenaufwand mit sich brächte.

Dem Nachteil der hohen Betriebskosten des Vergasers durch den Einsatz von Sauerstoff stehen folgende Vorteile entgegen:
- Eine sichere Verhinderung der Bildung von Dioxinen und Furanen, da in der Vergasung Dioxin- und/oder Furanverbindungen abgebaut werden, so daß sowohl das aus der Vergasung gewonnene Gas als auch die Schlacke frei von Dioxinen und Furanen sind
- eine sichere Einglasung der Schwermetalle in der Schlacke und damit keine Erzeugung von Sondermüll
- seine Eignung zur Spaltung von festen, flüssigen und pastösen Chlorkohlenwasserstoffen sowie zur Entsorgung des Spaltkokses aus der PVC-Spaltung
- die Erzeugung eines Brenngases als in anderen Anlagen einsetzbarer Energieträger
- die relativ einfache Entfernung des HCl aus dem Brenngas.

Durch die erfindungsgemäße Kopplung beider Verfahren bei gleichzeitigem Energieverbund werden die Nachteile der einzelnen Verfahren abgebaut, ohne daß aber deren Vorteile reduziert werden.

Der Sauerstoffbedarf für die Vergasung wird durch die vorgelagerte PVC-Spaltung durch Quetschen und Erhitzen des Abfall-PVC vorteilhaft minimiert, weil bereits in dieser Stufe ein Spaltgas mit hohem HCl-Gehalt abgetrennt und durch diese Maßnahme die Einsatzmenge für den Vergaser wesentlich reduziert wird. Gleichzeitig steigt der Heizwert der noch zu vergasenden Reststoffe wesentlich an, weil der Spaltkoks fast frei von Chlorbestandteilen ist.

Erfindungsgemäß wird die Vergasung mit Spaltkoks beschickt. Das in der Vergasung gebildete Brenngas wird im Verbrennungsofen mit Hilfe von Luft verbrannt und hält so den Verbrennungsofen ständig auf Betriebstemperatur. Das aus dem Verbrennungsofen austretende Rauchgas wird in einem nachgeschalteten Dampferzeuger abgekühlt. In ihm wird mindestens der für die Salzsäuredestillation benötigte Heizdampf erzeugt.

Bei zusätzlichem Bedarf von HCl-Gas wird der Verbrennungsofen mit flüssigen und/oder pastösen chlorierten Kohlenwasserstoffen beschickt. Da der Verbrennungsofen ständig auf Betriebstemperatur gehalten wird, erfolgt sofort die Verbrennung der chlorierten Kohlenwasserstoffe unter Abspaltung von HCl. Das HCl wird aus dem Rauchgasstrom durch Absorption in Wasser entfernt und die entstandene Salzsäure destillativ aufgearbeitet.

Die Verbrennung der flüssigen oder pastösen chlorierten Kohlenwasserstoffe im Verbrennungsofen erfolgt durch Luft. Deshalb ist kein zusätzlicher Bedarf an Sauerstoff vorhanden. Durch die ständige Beheizung des Verbrennungsofens mit dem Brenngas aus der Vergasung des Spaltkokses ist kein zusätzlicher Energieträger für die Temperaturhaltung erforderlich.

Dem im erfindungsgemäßen Verfahren aufzuarbeitendem PVC können andere Kohlenwasserstoffe und /oder kohlenwasserstoffhaltige Verbindungen zugemischt werden. Das erfindungsgemäße Verfahren eignet sich für die Zumischung von festen chlorfreien Kohlenwasserstoffverbindungen, insbesondere aber auch für die Zumischung von festen chlorkohlenwasserstoffhaltigen Verbindungen zum PVC. Die Zumischung kann dabei vor und /oder nach dem Quetschen erfolgen. Leicht vermahlbare und spröde Verbindungen können nach dem Mahlen direkt in die Vergasung eingespeist werden, während schwer vermahlbare Verbindungen bevorzugt vor dem Extruder (oder vor einem anderen Apparat an dessen Stelle) oder vor einem vorgeschalteten Shredder zugegeben werden.

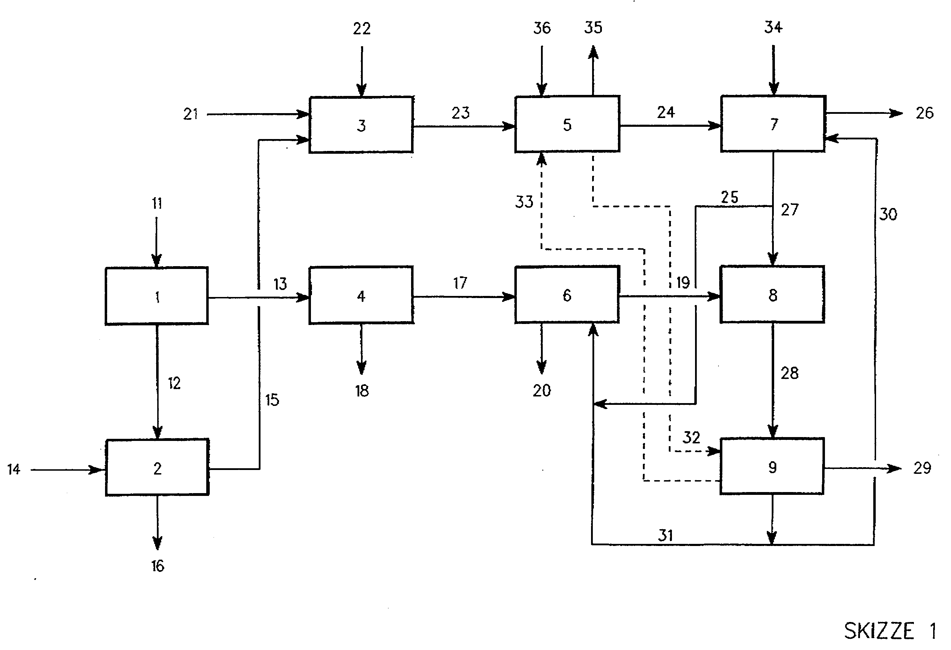

Im folgenden wird das in der Figur dargestellte erfindungsgemäße Verfahren beschrieben und die Vorteile anhand zweier Ausführungsbeispiele näher erläutert.

Die beispielhafte Anlage gemäß Figur besteht aus dem Zweischneckenextruder 1, dem Vergaser 2, dem Verbrennungsofen 3, der Spaltgasvorreinigung 4, dem Abhitzekessel 5, den Chlorwasserstoffabsorptionen 6 und 7, dem Salzsäurezwischenlager 8 und der Salzsäuredestillation 9. Dabei können der Vergaser 2 und der Verbrennungsofen 3 auf getrennten Baufeldern stehen, aber auch in einer Baueinheit zusammengefaßt sein.

PVC-Abfälle werden in einem Shredder auf Teilchengrößen von 10-15 mm zerkleinert und nach Passieren eines Metallschneiders als Strom 11 in den Zweischneckenextruder 1 gegeben. Beim Passieren des Extruders werden durch Erwärmung und Quetschen bei 310 bis 360 °C innerhalb von 10 bis 60 Sekunden die PVC-Abfälle in ein Spaltgas 13 mit z.B. 93,5 Gew.-% HCl und einen Spaltkoks 12 mit einer überwiegenden Korngröße zwischen 100 und 300 µm umgewandelt. Aus dem Spaltgas 13 werden in der Spaltgasvorreinigung 4 mitgerissene Kokspartikel sowie weitgehend die organischen Bestandteile entfernt (Strom 18). Die mit dem Strom 18 abgeschiedenen Bestandteile können entweder dem Verbrennungsofen 3 zugeführt oder anderweitig verwendet werden. Ein ausgeführtes Beispiel der Spaltgasvorreinigung besteht aus einem Heißzyklon, dem ein Venturiwäscher und ein Mischkondensator nachgeschaltet sind. Der Venturiwäscher und der Mischkondensator werden mit gekühlten Waschsäuren (konzentrierte Salzsäure) beaufschlagt, aus denen die kondensierten organischen Bestandteile (Aromaten, Olefine) mechanisch abgetrennt werden.

Das vorgereinigte und auf etwa Umgebungstemperatur abgekühlte Spaltgas 17 gelangt anschließend in die Chlorwasserstoffabsorption 6. Hier wird bei Normaldruck der Chlorwasserstoff durch die verdünnte Salzsäure (Ströme 25 und 31) absorbiert. Der Vorgang verläuft adiabat, so daß die auf 31,8 Gew.-% konzentrierte Säure 19 die Absorption mit 79 °C verläßt. Sie wird nach einer Abkühlung auf Umgebungstemperatur zum Salzsäurezwischenlager 8 gegeben. Das verbleibende Abgas 20 besteht zu 99,9 % aus CO₂.

Der Spaltkoks 12 wird im Vergaser 2 unter Benutzung von Sauerstoff (Strom 14) vergast. Die Vergasung verläuft unter erhöhtem Druck bei ca. 1600 °C. Zur Regelung der Vergasungstemperatur und zur Einsparung von Sauerstoff kann dem Strom 14 auch Wasserdampf zugemischt sein. Das entstehende Brenngas 15 wird auf eine Temperatur kleiner 500 °C gequencht und ohne besondere Reinigungsprozeduren in den Verbrennungsofen 3 gegeben. Die Schlacke 16 wird in einem Wasserbad abgeschreckt, wodurch die Schwermetalle aus dem Spaltkoks nicht eluierbar in der Schlacke engeglast werden.

Durch Regelung des Zuluftstromes 21 wird im Verbrennungsofen ständig eine Temperatur von ca. 1200 °C eingehalten. Das entstehende Rauchgas 23 wird im Abhitzekessel 5 auf ca. 250 °C abgekühlt. Die freigesetzte Wärmeenergie dient zur Erzeugung des Heizdampfes 32 (11 bar, 190 °C) aus dem rückgeführten Kondensat 33.

Das abgekühlte Rauchgas 24 passiert anschließend die Chlorwasserstoffabsorption 7, wo das im Rauchgas enthaltene HCl durch die verdünnte Salzsäure 30 sowie durch Wasser (Strom 34) ausgewaschen wird und ein HCl-freies Abgas 26 die Anlage verläßt. Die aus der Chlorwasserstoffabsorption 7 ablaufende Säure wird entweder zu weiteren Aufkonzentrierung zur Chlorwasserstoffabsorption 6 (Strom 25) und/oder zum Salzsäurezwischenlager 8 (Strom 27) gegeben.

Aus dem Salzsäurezwischenlager 8 speist der Strom 28 die Salzsäuredestillation 9. Hier wird unter erhöhtem Druck, in der Regel bei 6 bar im kontinuierlichen Betrieb das reine HCl-Gas 29 mit kleiner 100 ppm Wasser und kleiner 100 ppm CO₂ als Kopfprodukt und eine Salzsäure mit 17 bis 17,5 Ma-% HCl als Sumpfprodukt gewonnen, die als Ströme 30 und 31 zur erneuten Aufsättigung zu den Chlorwasserstoffabsorptionen 6 und 7 gegeben werden.

Die Salzsäuredestillation wird so betrieben, daß ein gleichmäßiger Mengenstrom reines HCl-Gas 29 die Anlage verläßt. Kann durch das Abfall-PVC 11 langfristig die dafür notwendige Chlormenge nicht zur Verfügung gestellt werden, werden zusätzlich im Verbrennungsofen 3 flüssige und/oder pastöse chlorierte Kohlenwasserstoffe verbrannt. Zur Aufrechterhaltung einer Verbrennungstemperatur größer/gleich 1200 °C wird der Zuluftstrom 21 entsprechend geregelt.

Der Heizdampf 32 für die Salzsäuredestillation wird im Abhitzekessel 5 erzeugt, das anfallende Kondensat 33 zum Abhitzekessel zurückgeführt, überschüssiger Dampf verläßt mit dem Strom 35 die Anlage, dafür notwendiges Kesselspeisewasser liefert der Strom 36.

Das vorgestellte Anlagenkonzept integriert erfindungsgemäß folgende Vorteile:
1. hohe Chlorausbeute aus dem Abfall-PVC durch die Spaltung im Extruder bei den erfindungsgemäßen Bedingungen,
2. gleichmäßiger Strom 29 aus reinem HCl-Gas durch die Möglichkeit einer zusätzlichen Verbrennung von anderen chlorierten Kohlenwasserstoffen,
3. Nutzung des Energieinhaltes des Abfall-PVC für die destillative Reinigung des HCl-Gases,
4. Minimierung des Energiebedarfes für die destillative Reinigung des HCl-Gases durch die Erzeugung eines Spaltgases mit hohem HCl-Gehalt,
5. Minimierung des Sauerstoffbedarfes durch
   - die Abtrennung von Spaltgas 13 im Zweischneckenextruder 1 und dadurch Verringerung des Eintrages in den Vergaser 2 auf die Menge des Spaltkokses 12, wobei gleichzeitig der spezifische Heizwert des Eintrages in den Vergaser 2 vom ursprünglichen Heizwert des Abfall-PVC auf den Heizwert des Spaltkokses erhöht wird mit der Folge, daß weniger Sauerstoff zum Erzielen der benötigten Vergasungstemperatur eingesetzt werden muß,
   - die verfahrensmäßige Trennung der Vergasung des Spaltkokses 12 von der Verbrennung der flüssigen/pastösen chlorierten Kohlenwasserstoffe 22,
6. Erhöhung der Lebensdauer des Verbrennungsofens 3 sowie ständige Bereitschaft des Ofens zur Spaltung flüssiger/pastöser chlorierter Kohlenwasserstoffe 22 durch die ständige Verbrennung des Brenngases 15 bei konstanter Ofentemperatur,
7. Verzicht auf zusätzliche Energieträger wie Kohlenstaub, Erdgas, Heizöl.

Der Unterschied der Fahrweisen bei der Verarbeitung von Hart-PVC und von Weich-PVC wird durch 2 Ausführungsbeispiele gezeigt.

### Beispiel 1

Hart-PVC, beispielsweise aus Rohrleitungsabfällen, wird auf eine Körnung mit einem mittleren Durchmesser < 15 mm in einem Shredder zerkleinert. Dieses Hart-PVC wird mit einem Durchsatz von 1895 kg/h in einen Extruder gegeben. Bei einer mittleren Temperatur in der Zersetzungszone des Extruders von 352 °C und bei einer mittleren Verweilzeit von 23 Sekunden entstehen 1000 kg/h Spaltgas mit hohem HCl-Gehalt und 895 kg/h Spaltkoks.

Das Spaltgas enthält neben gasförmigem HCl (HCl-Gas) noch
0,52 Vol.-% CO₂ sowie
3340 mg/m³ organische Verbindungen.

Diese organischen Verbindungen bestehen im wesentlichen aus Benzen (2912 mg/m³).

Der gewonnene Spaltkoks besitzt eine Größenverteilung hinsichtlich seiner Körnung von

| Anteil: | Größe: |
|---|---|
| 14,3 % | > 500 µm |
| 73,3 % | 200 bis 500 µm |
| 12,0 % | 125 bis 200 µm |
| 0,4 % | 50 bis 125 µm |

Der Spaltkoks enthält neben festen Kohlenwasserstoffen
2,63 g/kg Cl⁻
2 mg/kg F⁻
< 0,2 mg/kg Br⁻
sowie
266 mg/kg flüchtige organische Verbindungen
Diese flüchtigen organischen Verbindungen bestehen im wesentlichen aus Benzen (155 mg/kg).

Der Spaltkoks wird anschließend mit 486 m³/h (gemeint sind hier und im folgenden immer m³ im Normzustand bei 1 atm und 0°C) Sauerstoff zu Schlacke und einem Brenngas umgewandelt. Dieses Brenngas wird im Verbrennungsofen verbrannt. Durch Abkühlung des entstandenen Rauchgases werden im nachgeschalteten Kessel 7,6 t/h Dampf erzeugt.

### Beispiel 2

1895 kg/h PVC-Abfälle aus einer Mischung von Hart-PVC und Fußbodenbelag (Weich-PVC) im Verhältnis 1:1 werden mit einer Körnung bzw. einem mittleren Durchmesser < 15 mm in einen Extruder gegeben und dort bei einer mittleren Temperatur von 358 °C in der Zersetzungszone und einer mittleren Verweilzeit von 22 Sekunden im Extruder zu 668 kg/h Spaltgas mit hohem HCl-Gehalt und 1227 kg/h Spaltkoks zersetzt.

Das Spaltgas enthält neben gasförmigem HCl
3,1 Vol.-% CO₂
0,4 Vol.-% HF
< 0,02 Vol.-% HBr
sowie
328 mg/m³ organische Verbindungen.

Diese organischen Verbindungen bestehen im wesentlichen aus Benzen (212 mg/l) sowie aus 1-Octane (58 mg/l).

Der Spaltkoks weist eine Größenverteilung bezüglich des Durchmessers auf mit

| Anteil: | Größe: |
|---|---|
| 19,1 % | > 500 µm |
| 68,1 % | 200 bis 500 µm |
| 12,7 % | 125 bis 200 µm |
| 0,1 % | 50 bis 125 µm |

Der Spaltkoks enthält neben festen Kohlenwasserstoffen
36,4 g/kg Cl⁻
6 mg/kg F⁻
0,7 Vol.-% Br⁻
sowie
316 mg/kg organische Verbindungen
Von den flüchtigen organischen Verbindungen entfallen 72 mg/kg auf Benzen.

Die Differenz der gewonnenen 668 kg/h Spaltgas in Beispiel 2 zu 1000 kg/h Spaltgas aus Beispiel 1 soll durch Spaltung von 578 kg/h Dichlorpropan ausgeglichen werden, damit trotz des gegenüber Beispiel 1 veränderten Einsatzes in der Anlage eine im wesentlichen konstante Menge an HCl-Gas für eine nachfolgende Oxichlorierung erzeugt wird.
A. Bei der Zuspeisung des Dichlorpropans in den Flugstromvergaser, in welchem auch der Spaltkoks zu Schlacke und Brenngas umgewandelt wird, benötigt die Vergasung 522 m³/h Sauerstoff für die Reaktion des Spaltkokses und zusätzlich 212 m³/h Sauerstoff für die Reaktion des Dichlorpropans. Insgesamt besteht also in der Vergasung ein Bedarf von 734 m³/h Sauerstoff.
   Durch Verbrennung des entstandenen Brenngases in einem Verbrennungsofen mit Hilfe von Luft und anschließender Abkühlung des entstandenen Rauchgases im nachgeschalteten Kessel werden 8,8 t/h Dampf erzeugt.
B. Bei einer erfindungsgemäßen Zuspeisung des Dichlorpropans in den Verbrennungsofen bei gleichzeitiger Verbrennung des Brenngases aus der Vergasung werden die 212 m³/h Sauerstoff aus Fall A im Vergaser nicht benötigt, sondern ausschließlich die 522 m³/h Sauerstoff für die Reaktion des Spaltkokses. Das bedeutet eine Einsparung von 40 % des für die Spaltkoksvergasung erforderlichen Sauerstoffes.
   Durch Abkühlung des Rauchgases aus dem Verbrennungsofen im nachgeschalteten Kessel werden 8,3 t/h Dampf erzeugt.

Ein Vergleich der Fälle A und B macht die Vorteile des erfindungsgemäßen Verfahrens deutlich, da die im Fall B etwas kleinere Kapazität der Dampferzeugung die wesentliche Kosteneinsparung durch den niedrigeren Sauerstoffbedarf nur geringfügig und unwesentlich mindert.

## Patentansprüche

1. Verfahren zur kombinierten Aufarbeitung von PVC und anderen chlorierten Kohlenwasserstoffen durch rohstoffliche Zerlegung, **dadurch gekennzeichnet**,
a) daß das PVC gequetscht und unter Erwärmung aufgespalten wird, wobei ein Spaltgas mit hohem HCl-Gehalt und ein im wesentlichen Kohlenwasserstoffe enthaltender feinkörniger, frei fließfähiger Spaltkoks gewonnen werden,
b) daß der Spaltkoks einer Vergasung, vorzugsweise einer Flugstromvergasung, zugeführt wird, wobei aus der Vergasung neben Schlacke ein Brenngas gewonnen wird und
c) daß dieses Brenngas zumindest teilweise in einen Verbrennungsofen gegeben wird, in dem andere, vorzugsweise flüssige und/oder pastöse chlorierte Kohlenwasserstoffe verbrannt werden.

2. Verfahren nach Anspruch 1, dadurch gekennzeichnet, daß das Rauchgas aus dem Verbrennungsofen zunächst in einem Abhitzekessel abgekühlt wird, in welchem mindestens der zur HCl-Destillation notwendige Heizdampf erzeugt wird, und anschließend aus dem Rauchgas der Chlorwasserstoff in wäßriger Lösung als Salzsäure absorbiert wird.

3. Verfahren nach einem der vorhergehenden Ansprüche, dadurch gekennzeichnet, daß das Spaltgas aus der PVC-Spaltung nach einer Vorreinigung zur Entfernung von Rußpartikeln und organischen Bestandteilen ebenfalls einer Chlorwasserstoff-Absorption zugeführt wird, in welcher das HCl in wäßriger Lösung als Salzsäure aus dem Spaltgas entfernt wird,

4. Verfahren nach einem der vorhergehenden Ansprüche, dadurch gekennzeichnet, daß die Salzsäure aus der Absorptionsstufe für das Spaltgas der PVC-Spaltung und aus der Absorptionsstufe für das Rauchgas des Verbrennungsofens destillativ zu HCl-Gas aufgearbeitet wird.

5. Verfahren nach einem der vorhergehenden Ansprüche, dadurch gekennzeichnet, daß das PVC in einem Extruder, vorzugsweise in einem Zweischneckenextruder, gequetscht und aufgespalten wird.

6. Verfahren nach einem der vorhergehenden Ansprüche, dadurch gekennzeichnet, daß die Aufspaltung in einem Zeitraum von 10 bis 60 Sekunden bei Temperaturen zwischen 200 und 400 °C, vorzugsweise zwischen 290 und 380 °C, besonders bevorzugt zwischen 310 und 360 °C, durchgeführt wird.

7. Verfahren nach einem der vorhergehenden Ansprüche, dadurch gekennzeichnet, daß das PVC vor dem Quetschen auf eine Größe mit mittlerem Durchmesser von 1 bis 50 mm, bevorzugt von 10 bis 15 mm, vorzugsweise in einem Shredder, zerkleinert wird.

8. Verfahren nach Anspruch 1, dadurch gekennzeichnet, daß der Verbrennungsofen unter Zugabe von Luft betrieben wird.

9. Verfahren nach Anspruch 1, dadurch gekennzeichnet, daß in dem Verbrennungsofen chlorierte Kohlenwasserstoffe diskontinuierlich verbrannt werden, wobei im Ofen kontinuierlich zumindest eine Brenngasflamme aufrechterhalten wird.

10. Verfahren nach Anspruch 1, dadurch gekennzeichnet, daß eine im wesentlichen konstante Menge an HCl-Gas erzeugt wird, indem Schwankungen der Menge des Spaltgases durch Zugabe einer entsprechenden Menge an HCl aus der Verbrennung anderer, vorzugsweise flüssiger und/oder pastöser chlorierter Kohlenwasserstoffe ausgeglichen werden.

11. Verfahren nach einem der vorhergehenden Ansprüche, dadurch gekennzeichnet, daß dem aufzuarbeitendem PVC andere Kunststoffe bzw. Kohlenwasserstoffe zugemischt werden.

12. Verfahren nach Anspruch 11, dadurch gekennzeichnet, daß die Zumischung vor und/oder nach der Quetschung und Spaltung erfolgt.
